(19) Europäisches Patentamt
European Patent Office
Office européen des brevets

(11) **EP 1 674 830 A2**

(12) **EUROPÄISCHE PATENTANMELDUNG**

(43) Veröffentlichungstag:
**28.06.2006 Patentblatt 2006/26**

(51) Int Cl.:
***G01D 5/244*** (2006.01)

(21) Anmeldenummer: **05027690.6**

(22) Anmeldetag: **17.12.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **23.12.2004 DE 102004062118**

(71) Anmelder: **Aradex AG
73547 Lorch (DE)**

(72) Erfinder:
• **Vetter, Thomas
73547 Lorch (DE)**
• **Speer, Rolf
73547 Lorch (DE)**

(74) Vertreter: **Ruckh, Rainer Gerhard
Fabrikstrasse 18
73277 Owen/Teck (DE)**

(54) **Verfahren zur Verbesserung der Signalqualität von sinusförmigen Spursignalen**

(57) Die Erfindung betrifft ein Verfahren zur Verbesserung der Signalqualität von durch inkrementelle Messgeber (1) generierten sinusförmigen Spursignalen. In einem ersten Verfahrensschritt erfolgt die Ermittlung der Signalverläufe der sinusförmigen Spursignale während eines Kalibrierlaufs des Messgebers (1) bei konstanter Geschwindigkeit, wobei die Maxima und Minima der Signalverläufe ermittelt werden. Danach erfolgt die Berechnung von Korrekturwerten durch Linearkombination der Maxima und Minima zur Elimination von Offset- und Amplitudenfehlern für die einzelnen Perioden der sinusförmigen Spursignale. Schließlich erfolgt Kalibrierung der während des Betriebs generierten sinusförmigen Spursignale mit den Korrekturwerten.

EP 1 674 830 A2

Fig. 1

**Beschreibung**

Die Erfindung betrifft ein Verfahren zur Verbesserung der Signalqualität von sinusförmigen Spursignalen.

Derartige sinusförmige Spursignale werden von inkrementellen Messgebern generiert, die generell zur Positionsbestimmung eingesetzt werden. Insbesondere werden derartige Messgeber in Antrieben zur Bestimmung deren aktueller Positionen eingesetzt. Allgemein können die sinusförmigen Spursignale von rotativen Messgebern gebildet sein, welche als Messgrößen den aktuellen Drehwinkel von Antrieben und dergleichen liefern. Alternativ können die sinusförmigen Spursignale von linearen Messgebern gebildet sein, wobei in diesem Fall die sinusförmigen Spursignale Weginformationen liefern. Die in Rede stehenden Messgeber können beispielsweise von optischen oder magnetischen Lagegebern oder Resolvern gebildet sein.

Generell bestehen Messgeber aus einem Sensorelement und einem relativ zu diesem bewegten Maßkörper, wobei durch Erfassung des Maßkörpers die sinusförmigen Spursignale generiert werden. Aus den Nulldurchgängen der sinusförmigen Spursignale werden die aktuellen Grobpositionen bestimmt. Durch Auswertung der Kurvenformen der sinusförmigen Spursignale werden noch genauere Positionswerte erhalten, da diese zwischen zwei Nulldurchgängen der sinusförmigen Spursignale ein Maß für die jeweilige Feinpositionen liefern.

Da die Herstellung der Maßkörper systembedingt toleranzbehaftet ist, ergeben sich beim Betrieb des Messgebers Abweichungen vom idealen sinusförmigen Verlauf der Spursignale. Diese Abweichungen führen zu Störfrequenzen in dem sinusförmigen Spursignal. Auch Toleranzen der optoelektronischen oder elektronischen Bauteile führen zu solchen Effekten.

Zur Korrektur derartiger Messfehler können prinzipiell Referenz-Messgeber eingesetzt werden. Typischerweise werden sowohl mit dem jeweiligen Messgeber als auch mit dem Referenz-Messgeber die jeweiligen Positionen bestimmt. Aus der Differenz der mit diesen Gebern ermittelten Positionen wird dann ein Korrekturalgorythmus abgeleitet, mit welchem die Messfehler des Messgebers kompensiert werden.

Nachteilig hierbei ist, dass zur Kompensation der Messfehler mit dem Referenz-Messgeber eine zusätzliche Einheit benötigt wird. Da an diesen Referenz-Messgeber zudem hohe Anforderungen bezüglich der Messgenauigkeit gestellt werden müssen, stellt dieser auch einen erheblichen Kostenfaktor dar.

Weiterhin ist nachteilig, dass bei in bestehenden Anlagen und Maschinen eingebauten Messgebern der jeweilige Referenz-Messgeber aus Platzgründen oft nicht oder nur mit hohem Aufwand eingebaut werden kann.

Aus der DE 100 36 090 B4 ist ein Verfahren zur Unterdrückung systematischer Fehler von inkrementellen Positions- oder Drehwinkelgebern mit mindestens zwei um einen Phasenwinkel verschobenen sinusförmigen Spursignalen bekannt. Bei diesem Verfahren wird das jeweilige Spursignal durch einen komplexen Zeiger beschrieben. Mit diesem wird ein mathematisches Modell definiert, in welchem Fehlerparameter als Maß für Amplituden- und Phasenfehler der Spursignale über Integralgleichungen bestimmt werden.

Abgesehen davon, dass dieses Verfahren einen erheblichen Rechenaufwand erfordert, ist zudem nachteilig, dass zur Umsetzung des Verfahrens ein hierfür spezifisches Rechenwerk benötigt wird.

Der Erfindung liegt die Aufgabe zugrunde, ein Verfahren der eingangs genannten Art derart auszubilden, dass mit möglichst geringem Aufwand eine effiziente Verbesserung der Signalqualität von sinusförmigen Spursignalen erzielt wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren dient zur Verbesserung der Signalqualität von durch inkrementelle Messgeber generierten sinusförmigen Spursignalen und umfasst folgende Verfahrensschritte:

-  Ermittlung der Signalverläufe der sinusförmigen Spursignale während eines Kalibrierlaufs des Messgebers (1) bei vorgegebener, vorzugsweise konstanter, Geschwindigkeit,

-  Ermittlung der Maxima und Minima aus den Signalverläufen,

-  Berechnen von Korrekturwerten durch Linearkombination der Maxima und Minima zur Elimination von Offset- und Amplitudenfehlern für die einzelnen Perioden der sinusförmigen Spursignale,

-  Kalibrierung der während des Betriebs generierten sinusförmigen Spursignale mit den Korrekturwerten.

Ein wesentlicher Vorteil des erfindungsgemäßen Verfahrens besteht darin, dass zur Kalibrierung des Messgebers keine zusätzlichen, externen Einheiten benötigt werden. Insbesondere kann das erfindungsgemäße Verfahren ohne die Verwendung von Referenz-Messgebern durchgeführt werden.

Dadurch kann das erfindungsgemäße Verfahren insbesondere auch bei Messgebern durchgeführt werden, die in Anlagen, Maschinen und dergleichen eingebaut sind. Da keine externen Komponenten benötigt werden, ist das erfindungsgemäße Verfahren sehr kostengünstig durchführbar und auch zu einem späteren Zeitpunkt an einer bereits im Einsatz befindlichen Maschine wiederholbar, um beispielsweise sich verändernde Eigenschaften des Messsystems, die zum Beispiel durch Alterung oder Verschmutzung bedingt sind, zu kompensieren.

Die bei der Kalibrierung ermittelten Korrekturwerte werden zweckmäßigerweise in einer Rechnereinheit gespeichert. Diese kann Bestandteil des Messgebers selbst oder einer Messgeber-Auswerteeinheit sein. Alternativ kann die Rechnereinheit in einem Antriebsverstärker oder einer Steuerung für einen Antrieb, an welchem der Messgeber angeordnet ist, integriert sein. In jedem Fall ist gewährleistet, dass als Rechnereinheit bestehende Komponenten des Messgebers oder eines Antriebs genutzt werden können, so dass keine zusätzlichen Hardwarekomponenten zur Durchführung des erfindungsgemäßen Verfahrens notwendig sind.

Die Amplituden- und Offset-Fehler können auf einfache Weise und mit hoher Genauigkeit aus den während des Kalibrierlaufs für die einzelnen Perioden der sinusförmigen Spursignale ermittelten Maxima und Minima ermittelt werden. Vorteilhaft hierbei ist, dass Korrekturwerte zur Kompensation der auftretenden Amplituden- und Offset-Fehler durch einfache Linearkombinationen der Maxima und Minima für die einzelnen Perioden der sinusförmigen Spursignale gewonnen werden. Der Rechenaufwand zur Bestimmung der Korrekturwerte ist dementsprechend gering.

Für eine genaue Kompensation der Offset- und Amplitudenfehler ist es notwendig, die Maxima und Minima der sinusförmigen Spursignale genau zu bestimmen. Zweckmäßigerweise wird hierzu während des Kalibrierlaufs der Messgeber mit einer möglichst geringen konstanten Geschwindigkeit betrieben. Prinzipiell kann dabei der Messgeber auch als Positionsgeber in einem Lageregelkreis verwendet werden.

Zur Ermittlung des Signalverlaufs werden dann die sinusförmigen Spursignale in einem vorgegebenen Zeitraster diskret abgetastet, wobei die Abtastung derart erfolgt, dass für jede Periode der sinusförmigen Spursignale möglichst viele Abtastwerte generiert werden. In der Rechnereinheit erfolgt dann eine Interpolation zwischen den Abtastwerten, wodurch den sinusförmigen Spursignalen sehr genau entsprechende Signalverläufe erhalten werden, anhand derer die Maxima und Minima mit hoher Genauigkeit bestimmt werden können.

Bei von den Messgebern generierten sinusförmigen Spursignalen sind häufig die auftretenden Phasenfehler im Vergleich zu den auftretenden Amplituden- und Offset-Fehlern gering. In diesem Fall ist es ausreichend, allein die Korrektur der Amplituden- und Offset-Fehler vorzunehmen.

Phasenfehler treten bei den sinusförmigen Spursignalen insbesondere durch eine Fehljustage wie einer Verkippung der Messgeber, insbesondere bei optischen Messgebern auf. In derartigen Fällen können die Phasenfehler von nennenswerter Größenordnung sein.

In einer vorteilhaften Weiterbildung des erfindungsgemäßen Verfahrens werden neben den Amplituden- und Offset-Fehlern auch die Phasenfehler von spurförmigen Spursignalen bestimmt, wobei die Messungen hierfür in einem zweistufigen Verfahren in zwei aufeinander folgenden Kalibrierläufen durchgeführt werden. In einem ersten Kalibrierlauf werden Korrekturwerte zur Elimination der Amplituden- und Offset-Fehler gemäß dem zuvor beschriebenen Verfahren bestimmt. In dem zweiten Kalibrierlauf werden die Verläufe von wenigstens zwei gegeneinander phasenverschobenen Spursignalen gemessen und dann mit den Korrekturwerten für die Amplituden- und Offset-Fehler korrigiert. Diese Signalverläufe werden dann zur Elimination der Phasenfehler herangezogen. Dabei erfolgt die Phasenkorrektur eines Spursignals relativ zu einem als Bezugspunkt verwendeten weiteren hierzu phasenverschobenen Spursignals.

Da die beim zweiten Kalibrierverlauf ermittelten Verläufe der Spursignale mit den beim ersten Kalibrierverlauf ermittelten Korrekturwerten korrigiert werden, enthalten diese keine Amplituden- und Offset-Fehler mehr, so dass diese Verläufe der Spursignale zu einer präzisen Elimination des Phasenfehlers herangezogen werden können.

In einer ersten, besonders einfachen Ausgestaltung werden zur Elimination des Phasenfehlers die Amplituden des ersten Spursignals in den Nulldurchgängen des zweiten Spursignals gemessen und aus diesen Korrekturfaktoren zur Elimination des Phasenfehlers berechnet. Diese Methode der Elimination von Phasenfehlern kann mit einem äußerst geringen Rechenaufwand durchgeführt werden.

In einer zweiten Ausgestaltung erfolgt die Bestimmung des Phasenfehlers anhand der Auswertung der kompletten Verläufe beider Spursignale in dem der Phasenfehler nach der Methode der kleinsten quadratischen Abweichungen bestimmt wird. Dieses Verfahren bedingt zwar einen erhöhten Rechenaufwand, zeichnet sich jedoch durch eine hohe Genauigkeit bei der Bestimmung der Phasenfehler auf.

In jedem Fall erfolgt die Bestimmung des Phasenfehlers ortsabhängig, das heißt separat für die einzelnen Perioden des sinusförmigen Spursignals.

Die bei dem ersten und zweiten Kalibrierverlauf ermittelten Korrekturwerte für die Amplituden-, Offset- und Phasen-Fehler werden abgespeichert und zur Kalibrierung der während des Betriebs des Messgebers generierten Spursignale genutzt.

Das erfindungsgemäße Verfahren ist universell für rotative und lineare Messgeber einsetzbar. Die Messgeber können dabei als optische oder magnetische Geber, Resolver und dergleichen ausgebildet sein.

Die Erfindung wird im Nachstehenden anhand der Zeichnungen erläutert. Es zeigen:

Figur 1:　Perspektivische Darstellung der Komponenten eines optischen Messgebers.

Figur 2:　Zeitlicher Verlauf von mit dem Messgeber gemäß Figur 1 generierten sinusförmigen Spursignalen.

Figur 3: Schematische Darstellung eines ersten Verfahrens zur Bestimmung des Phasenfehlers bei zwei gegeneinander phasenvernetzten sinusförmigen Spursignalen.

Figur 4: Schematische Darstellung eines zweiten Verfahrens zur Bestimmung des Phasenfehlers bei zwei gegeneinander phasenvernetzten sinusförmigen Spursignalen.

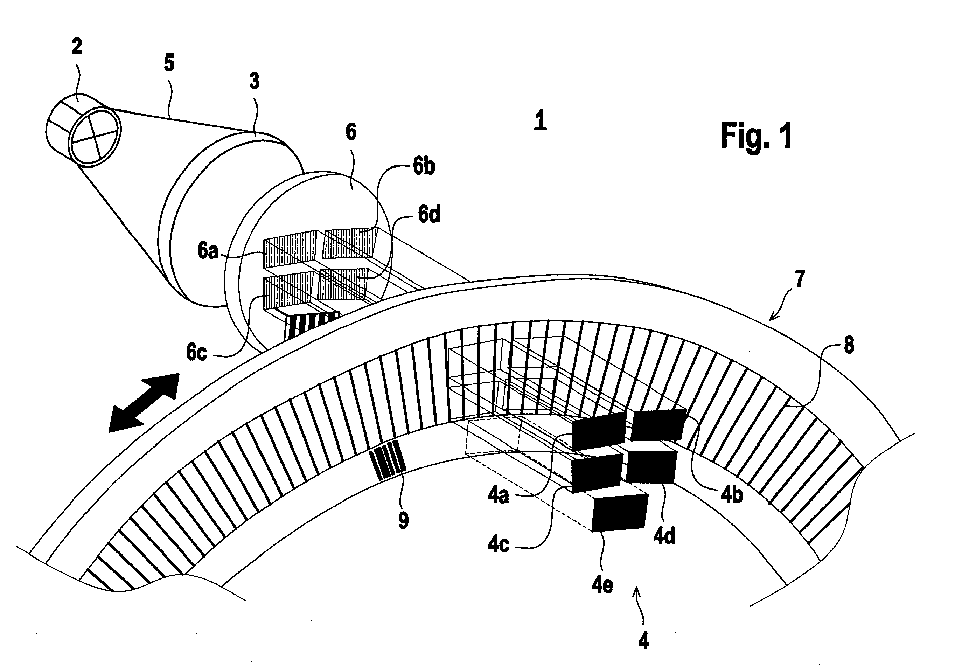

Figur 1 zeigt schematisch den Aufbau eines inkrementellen Messgebers 1, der im vorliegenden Fall als rotativer optischer Lagegeber ausgebildet ist.

Prinzipiell können anstelle von rotativen Lagegebern auch lineare Geber eingesetzt werden. Des Weiteren ist das Messprinzip des Messgebers 1 nicht auf optische Verfahren begrenzt. Prinzipiell können als Messgeber 1 auch magnetische Geber, Resolver oder dergleichen eingesetzt werden.

Der Messgeber 1 gemäß Figur 1 wird bevorzugt als Positionsgeber in einem nicht dargestellten Antrieb oder dergleichen eingesetzt. Der Messgeber 1 umfasst als optisches Sensorelement eine Lichtquelle 2 mit einem nachgeordneten Kondensor 3, sowie einen in Abstand zur Lichtquelle 2 liegenden Empfänger 4, bestehend aus mehreren diskreten Photoelementen 4a - 4e. Die Lichtquelle 2 besteht bevorzugt aus einer Leuchtdiode.

Im Strahlengang der von der Lichtquelle emittierten Lichtstrahlen 5 liegt hinter dem Kondensor 3 eine Abtastplatte 6 mit vier Abtastfeldern 6a - 6d. Jedes Abtastfeld 6a-6d besteht aus einer Anordnung von dunklen und hellen Strichen.

Durch den Kondensor 3 wird die Abtastplatte 6 von den Lichtstrahlen 5 vollständig und homogen ausgeleuchtet. Jeweils eines der Photoelemente 4a - 4e ist so in Abstand zur Abtastplatte 6 angeordnet, dass die eines der Abtastfelder 6a - 6d durchsetzenden Lichtstrahlen 5 auf jeweils eines der Photoelemente 4a - 4d geführt sind.

Als Maßkörper ist zwischen der Abtastplatte 6 und dem Empfänger 4 eine vorzugsweise aus Glas bestehende kreisringförmige Teilscheibe 7 angeordnet, auf welcher ein Radialgitter 8 aufgebracht ist, welches aus einer regelmäßigen Folge von Strichelementen besteht, die durch identisch ausgebildete Lücken getrennt sind. Auf einem inneren Ringsegment ist zudem eine Referenzmarke 9 angebracht.

Die Teilscheibe 7 ist am Antrieb drehbar gelagert. Durch die Drehbewegung der Teilscheibe 7 wird das Radialgitter 8 durch das Strahlenbündel der Lichtstrahlen 5 bewegt. Dadurch moduliert das Radialgitter 8 die durch die Abtastfelder 6a - 6d geführten Teilstrahlenbündel, die zu den einzelnen Photoelementen 4a - 4d geführt sind.

Dementsprechend werden als Ausgangssignale der Photoelemente 4a-4d sinusförmige Stromsignale erhalten, welche sinusförmige Spursignale bilden, aus welchen rotative Positionsinformationen über die Lage des Radialgitters 8 und damit des Antriebs erhalten werden.

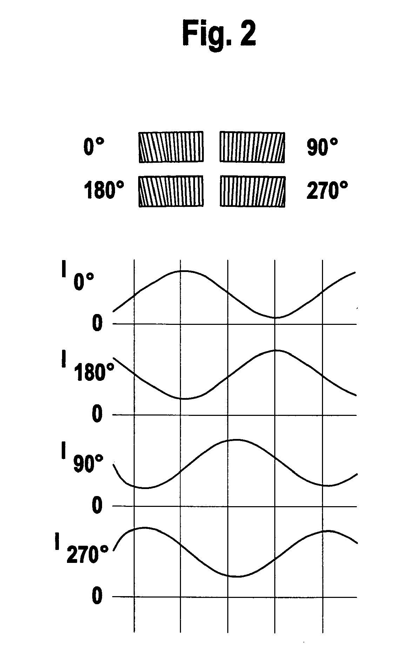

Die Abtastfelder 6a - 6d der Abtastplatte 6 enthalten versetzt zueinander liegende Strichmuster, so dass mit diesen die in Figur 2 zueinander jeweils um 90° versetzten sinusförmigen Spursignale generiert werden.

In Figur 2 sind dabei die sinusförmigen Spursignale mit $I_0$, $I_{90}$, $I_{180}$, $I_{270}$ bezeichnet, wobei jeweils eine Sinusperiode dieser Signale dargestellt ist. Das erste sinusförmige Spursignal $I_0$ wird mittels des ersten Abtastfelds 6a im Photoelement 4a generiert, die hierzu um 90°, 180° beziehungsweise 270° phasenverschobenen sinusförmigen Spursignale mit den Abtastfeldern 6b - 6d.

Aus diesen sinusförmigen Spursignalen werden inkrementielle Positionsinformationen gewonnen. Mittels der Referenzmarke 9, die mit dem Photoelement 4e detektiert wird, können absolute Positionsinformationen gewonnen werden.

Die Nulldurchgänge der einzelnen sinusförmigen Spursignale liefern dabei Grobpositionen. Durch Auswertung der Kurvenformen der sinusförmigen Spursignale können noch genauere Positionsinformationen gewonnen werden.

Hierzu werden beispielsweise die sinusförmigen Spursignale $I_0$ und $I_{90}$ zur Auswertung herangezogen, im Folgenden Spur A und Spur B genannt.

Durch den 90°-Versatz weisen die idealen, das heißt nicht fehlerbehafteten sinusförmigen Spursignale die Form eines Sinus und Cosinus gemäß den folgenden Beziehungen auf

$$\text{Spur A} = A * \sin(\varphi)$$

$$\text{Spur B} = B * \cos(\varphi),$$

wobei die Amplituden A, B bei idealen Verhältnissen gleich groß sind.

Als Feinpositionen können dann die Winkel $\varphi$ des Messgebers 1 beispielsweise gemäß der folgenden Beziehung bestimmt werden:

$$\varphi = \arctan(\text{Spur A}/\text{Spur B})$$

Durch Bauteiltoleranzen der Komponenten des Messgebers 1 sind die sinusförmigen Spursignale Spur A, Spur B jedoch fehlerbehaftet. Dabei rührt der Hauptfehler daher, dass die auf das Radialgitter 8 aufgebrachten Strichelemente zwar exakt äquidistant auf die Teilscheibe 7 aufgebracht werden können. Jedoch variieren die Konturen der Strichelemente bedingt durch den Herstellungsprozess. Dadurch weisen die sinusförmigen Spursignale zwar eine nahezu ideale Sinusform mit nur sehr geringen Phasenfehlern auf. Jedoch weisen diese signifikante Offset- und Amplitudenfehler auf.

Die mit den Offset- und Amplitudenfehlern behafteten sinusförmigen Spursignale lassen sich gemäß der folgenden Beziehungen darstellen

$$SpurA = OA + (A+\Delta A)\sin\varphi$$

$$SpurB = OB + (B+\Delta B)\cos\varphi.$$

Dabei bezeichnen $\Delta A$ und $\Delta B$ die Amplitudenfehler und OA, OB die Offset-Fehler in den sinusförmigen Spursignalen.

Zur Bestimmung der Offset- und Amplitudenfehler wird ein Kalibriervorgang durchgeführt, der vor Inbetriebnahme des Messgebers 1 mit dem zugeordneten Antrieb durchgeführt und gegebenenfalls in vorgegebenen Zeitintervallen wiederholt wird.

Zur Durchführung eines Kalibriervorganges wird ein Kalibrierlauf durchgeführt, bei welchem der Messgeber 1 über einen geeigneten Geschwindigkeitsbefehl mit vorgegebener, vorzugsweise konstanter Geschwindigkeit betrieben wird.

Während des Kalibrierlaufs werden die zeitlichen Verläufe der sinusförmigen Spursignale an den Ausgängen der entsprechenden Photoelemente 4a - 4e fortlaufend registriert. Vorzugsweise werden die sinusförmigen Spursignale innerhalb vorgegebener Zeitraster abgetastet. Dabei wird die Geschwindigkeit des Messgebers 1 hinreichend klein gewählt, so dass bei der Abtastung der sinusförmigen Spursignale für jede Sinusbeziehungsweise Cosinusperiode eine Vielzahl von Abtastwerten, die in der Größenordnung von wenigstens hundert liegt, generiert wird.

Die Messwertgenerierung und Messwertauswertung erfolgt in einer Rechnereinheit. Die Rechnereinheit kann prinzipiell Bestandteil einer externen zusätzlichen Einheit sein, wobei in dieser der Messgeber 1 als Positionsgeber in einem Lagerregelkreis dieser externen Einheit verwendet werden kann. Besonders vorteilhaft werden bereits vorhandene Einheiten des Messgebers 1 oder des Antriebs und dessen zugeordneten Komponenten hierfür genutzt. Besonders vorteilhaft wird eine im Messgeber 1 selbst integrierte Rechnereinheit zur Messwertauswertung während des Kalibrierlaufs genutzt. Alternativ kann die Rechnereinheit in dem Antrieb zugeordneten Komponenten, beispielsweise einem Antriebsverstärker oder einer Steuerung, integriert sein. Schließlich kann die Rechnereinheit Bestandteil einer Messgeber-Auswerteeinheit sein.

Zweckmäßigerweise erfolgt bei der Messwerterfassung während des Kalibrierlaufs eine Tiefpassfilterung der sinusförmigen Spursignale. Mit der Tiefpassfilterung werden Signalverzerrungen bedingt durch analoges Rauschen, insbesondere bedingt durch externe elektromagnetische Störungen, unterdrückt.

In der Rechnereinheit werden durch Interpolation zwischen den einzelnen Abtastwerten sinusförmige Signalverläufe generiert, welche den sinusförmigen Spursignalen angenähert sind. Zur Generierung dieser Signalverläufe werden bekannte Interpolationsverfahren eingesetzt. Beispielsweise kann zwischen benachbarten Abtastwerten eine lineare Interpolation durchgeführt werden. Weiterhin können durch quadratische Funktionen zwischen den Abtastwerten Signalverläufe generiert werden, die eine sehr gute Annäherung an einen sinusförmigen Verlauf bilden.

Für diese genäherten sinusförmigen Signalverläufe werden dann in der Rechnereinheit separat für sämtliche Sinusperioden die Maxima und Minima der Signalverläufe bestimmt. Aus jedem Wertepaar eines Maximums und Minimums einer Sinusperiode werden dann in der Rechnereinheit Korrekturwerte zur Kompensation der Amplituden- und Offset-Fehler berechnet. Die Korrekturwerte für jeweils eine Sinusperiode werden gemäß folgender Beziehungen berechnet

$$OA = (A_{max} + A_{min})/2$$

$$OB = (B_{max} + B_{min})/2$$

$$\Delta A = (A_{max} - A_{min})/2 - A$$

$$\Delta B = (B_{max} - B_{min})/2 - B$$

Die Offset-Fehler der sinusförmigen Spursignale, die einer konstanten Verschiebung einer Sinusperiode entsprechen, werden mit den Offset-Korrekturwerten OA, OB kompensiert, die jeweils dem arithmetischen Mittelwert des Maximums $A_{max}$, $B_{max}$ und Minimums $A_{min}$, $B_{min}$ einer Sinusperiode für den Signalverlauf des Spur A- oder Spur B-Signals entsprechen.

Die Amplituden-Fehler der sinusförmigen Spursignale, die sich in vorzeichenabhängigen Schwankungen der Amplitudenwerte der sinusförmigen Spursignale manifestieren, werden mit Amplituden-Korrekturwerten $\Delta A$, $\Delta B$ kompensiert, die jeweils aus den Differenzen der Maxima $A_{max}$, $B_{max}$ und Minima $A_{min}$, $B_{min}$ berechnet werden. Dabei sind die Differenzen auf ideale, theoretische Werte A beziehungsweise B bezogen, die als Rechenwerte vorgegeben sind.

Die Korrekturwerte OA, OB und $\Delta A$, $\Delta B$ für die einzelnen Sinusperioden werden in einer Korrekturtabelle in der Rechnereinheit gespeichert, womit der Kalibriervorgang beendet ist.

Für den Fall, dass die Phasenfehler der Spursignale gering und damit vernachlässigbar gegenüber den Amplituden- und Offset-Fehlern sind, reicht dieser Kalibriervorgang aus, um hinreichend präzise Messwerte mit dem Messgeber generieren zu können. Daher kann in diesem Fall nach dem Kalibrierlauf der Kalibriervorgang abgeschlossen und die Betriebsphase des Messgebers gestartet werden.

In der Betriebsphase des Messgebers 1 werden die sinusförmigen Spursignale bildenden Signale Spur A, Spur B mit den Korrekturwerten korrigiert, wobei die Signale Spur A für jede Sinusperiode mit den Korrekturwerten OA, $\Delta A$ und die Signale Spur B mit den Korrekturwerten OB, $\Delta B$ korrigiert.

Insbesondere durch Fehljustagen wie Verkippungen bei der Installation des Messgebers 1 können zusätzlich zu den Amplituden- und Offset-Fehlern auch signifikante Phasenfehler bei den Spursignalen Spur A und Spur B auftreten.

Zur Elimination der Phasenfehler wird der Kalibriervorgang dahingehend erweitert, dass an den ersten, bereits beschriebenen Kalibrierlauf zur Elimination der Amplituden- und Offset-Fehler ein zweiter Kalibrierlauf anschließt, wobei die dabei ermittelten Messwerte zur Elimination auftretender Phasenfehler verwendet werden.

Dabei werden die Messwerte für die Spursignale Spur A, Spur B, die beim zweiten Kalibrierlauf aufgenommen werden, mit den Korrekturwerten, die beim ersten Kalibrierlauf ermittelt wurden, korrigiert. Damit sind in den Messwerten des zweiten Kalibrierlaufs für die Spursignale Spur A, Spur B die Amplituden- und Offset-Fehler bereits eliminiert. Dies ist eine wesentliche Voraussetzung dafür, dass aus den zeitlichen Verläufen der Spursignale Spur A, Spur B, die beim zweiten Kalibrierlauf ermittelt werden, die dort enthaltenen Phasenfehler möglichst vollständig eliminiert werden können.

Analog zur Durchführung des ersten Kalibrierlaufs wird auch bei dem zweiten Kalibrierlauf der Messgeber 1 mit einer vorgegebenen, vorzugsweise geringen und konstanten Geschwindigkeit betrieben, wobei während des Kalibrierlaufs die Spursignale Spur A, Spur B fortlaufend registriert werden. Zudem kann auch in diesem Fall zweckmäßigerweise eine Tiefpassfilterung der registrierten Messwerte erfolgen.

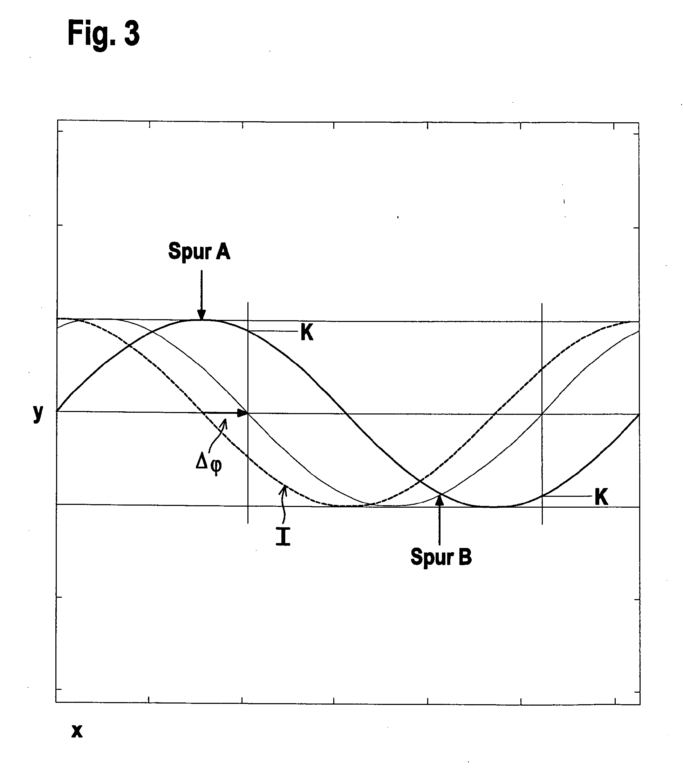

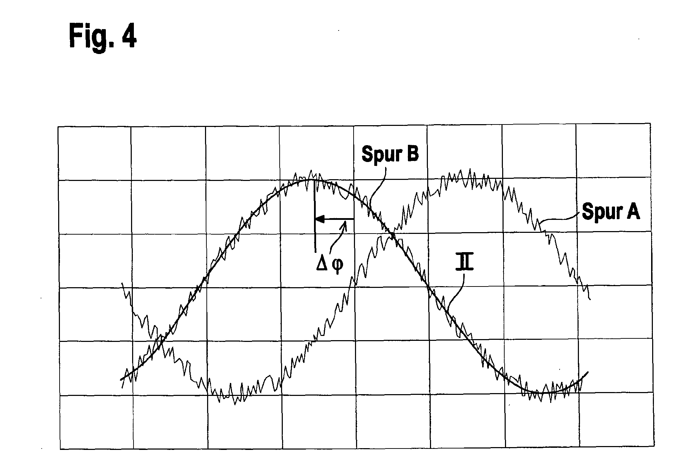

In den Figuren 3 und 4 sind zwei unterschiedliche Verfahren zur Elimination der Phasenfehler beschrieben. Dabei sind in beiden Figuren die zeitlichen Verläufe der Spursignale Spur A, Spur B dargestellt, bei welchen mittels der im ersten Kalibrierlauf ermittelten Korrekturwerte die Amplituden- und Offset-Fehler eliminiert wurden.

Bei dem in Figur 3 dargestellten Fall wird als Annahme zur Bestimmung des Phasenfehlers angenommen, dass das Spursignal Spur A keinen Phasenfehler aufweist und das Spursignal Spur B als Phasenfehler einen Phasenversatz $\Delta \varphi$ zu dem idealen, in Figur 3 mit I bezeichneten Signalverlauf, der bezüglich dem Spursignal Spur A um 90° phasenverschoben ist, aufweist.

Zur Ermittlung des Phasenfehlers des Spursignals Spur B werden innerhalb jeder Periode dieses Signals die Amplitudenwerte K des Spursignals Spur A in den Nulldurchgängen des zweiten Spursignals ermittelt.

Wäre der Phasenversatz $\Delta \varphi = 0$, so wäre das Spursignal Spur B exakt um 90° gegenüber dem Spursignal Spur B phasenverschoben, so dass sich für den Amplitudenmesswert K des Spursignals Spur A im Nulldurchgang von Spur B der maximale Amplitudenwert A des Spursignals Spur A ergebe.

Durch den Phasenversatz $\Delta \varphi \neq 0$ wird jedoch ein Amplitudenwerte K < A gemessen. Wie in Figur 3 dargestellt, hängt dabei das Vorzeichen des gemessenen Amplitudenwerts K davon ab, in welchem Quadranten die Messung erfolgt.

Aus den bekannten sinusförmigen Verläufen der Spursignale

$$\text{Spur A} = A \cdot \sin(\varphi)$$

$$\text{Spur B} = B \cdot \cos(\varphi - \Delta\varphi)$$

Lässt sich der Phasenversatz $\Delta \varphi$ in Abhängigkeit der gemessenen Amplitudenwerte K wie folgt ausdrücken

$$\Delta\varphi = Z \cdot A \cdot \arctan\left((1-K^2)^{\frac{1}{2}} / K\right).$$

Dabei ist Z ein Zahlenfaktor, der vom Quadrant, in welchem die Messung durchgeführt wurde, abhängt. Dabei nimmt der Faktor Z folgende Werte an:

$$\text{1. Quadrant } (0 < \varphi \leq \pi/2) : Z = +1$$

$$\text{2. Quadrant } (\pi/2 < \varphi \leq \pi) : Z = -1$$

$$\text{3. Quadrant } (\pi < \varphi \leq 3/2\pi) : Z = -1$$

$$\text{4. Quadrant } (3/2\pi < \varphi \leq 2\pi) : Z = +1$$

Der auf diese Weise für jede Periode des Spursignals Spur B bestimmte Phasenversatz Δφ bildet einen Korrekturwert zur Elimination des Phasenfehlers. Die für die einzelnen Perioden ermittelten Korrekturwerte werden in der Rechnereinheit abgespeichert, wonach der Kalibriervorgang beendet ist.

Wie aus Figur 3 ersichtlich, können für jede Periode des Spursignals Spur B an zwei Nulldurchgängen die Amplitudenwerte K zur Bestimmung des Phasenversatzes ermittelt werden. Besonders vorteilhaft können die dabei ermittelten Korrekturwerte gemittelt und diese Mittelwerte in einer Korrekturtabelle abgespeichert werden.

In der nachfolgenden Betriebsphase werden die aktuellen Spursignale des Messgebers 1 mit den Korrekturwerten, die beim ersten und zweiten Kalibrierlauf ermittelt wurden, korrigiert, wodurch auftretende Amplituden-, Offset- und Phasenfehler weitgehend eliminiert werden.

Durch die Annahme, dass nur das Spursignal Spur B, nicht aber das Spursignal Spur A einen Phasenfehler aufweist, kann nach durchgeführter Kalibrierung noch ein konstanter Phasenfehler zwischen den Spursignalen Spur A, Spur B verbleiben, der mittels einer einmaligen Eichmessung kompensierbar ist.

In Figur 4 ist ein weiteres Verfahren zur Bestimmung von Phasenfehlern in den Spursignalen Spur A, Spur B dargestellt. Dabei sind in Figur 4 die zeitlichen Verläufe der Spursignale Spur A, Spur B, die während des zweiten Kalibrierlaufs ermittelt wurden und aus welchen mittels der Korrekturwerte des ersten Kalibrierlaufs die Amplituden- und Offset-Fehler eliminiert wurden, dargestellt.

Auch in diesem Fall wird angenommen, dass nur das Spursignal Spur B, nicht aber das Spursignal einen Phasen-Fehler, das heißt einen bestimmten Phasenversatz Δφ aufweist.

Die Messwerte $A_i$, $B_i$ für die Spursignale Spur A, Spur B in Figur 4 sind daher durch folgende Gleichungen darstellbar:

$$A_i = \sin(\varphi_i)$$

$$B_i = \cos(\varphi_i - \Delta\varphi)$$

Dabei wurde eine für beide Spursignale gleiche maximale Amplitude der Größe 1 angenommen. Mit $\varphi_i$ sind die aktuellen Winkelpositionen für die aktuellen Messwerte $A_i$, $B_i$ bezeichnet.

Der Phasenversatz Δφ wird in diesem Fall durch eine Kurvenanpassung bestimmt, wobei diese Anpassung mittels eines Variationsverfahrens erfolgt. Dabei wird Δφ so bestimmt, dass eine cos-Ausgleichsfunktion für das gemessene Spursignal Spur B die kleinste quadratische Abweichung für die Messwerte $B_i$ liefert. Die Ausgleichsfunktion ist in Figur 4 mit II gekennzeichnet.

Bezugszeichenliste

| | |
|---|---|
| (1) | Messgeber |
| (2) | Lichtquelle |
| (3) | Kondensor |
| (4) | Empfänger |
| (4a-4e) | Photoelemente |
| (5) | Lichtstrahlen |
| (6) | Abtastplatte |
| (6a-6d) | Abtastfelder |
| (7) | Teilscheibe |
| (8) | Radialgitter |
| (9) | Referenzmarke |

**Patentansprüche**

1. Verfahren zur Verbesserung der Signalqualität von durch inkrementelle Messgeber generierten sinusförmigen Spursignalen, **gekennzeichnet durch** folgende Verfahrensschritte:

   - Ermittlung der Signalverläufe der sinusförmigen Spursignale während eines Kalibrierlaufs des Messgebers (1) bei vorgegebener Geschwindigkeit,
   - Ermittlung der Maxima und Minima aus den Signalverläufen,
   - Berechnen von Korrekturwerten **durch** Linearkombination der Maxima und Minima zur Elimination von Offset- und Amplitudenfehlern für die einzelnen Perioden der sinusförmigen Spursignale,
   - Kalibrierung der während des Betriebs generierten sinusförmigen Spursignale mit den Korrekturwerten.

2. Verfahren nach Anspruch 1, **dadurch gekennzeichnet, dass** zur Bildung von Offset-Korrekturwerten jeweils der arithmetische Mittelwert eines Minimums und Maximums gebildet wird.

3. Verfahren nach Anspruch 1 oder 2, **dadurch gekennzeichnet, dass** zur Bildung von Amplituden-Korrekturwerten jeweils die Differenz eines Maximums und Minimums gebildet wird.

4. Verfahren nach einem der Ansprüche 1 bis 3, **dadurch gekennzeichnet, dass** während des Kalibrierlaufs die sinusförmigen Spursignale mit einer vorgegebenen Abtastrate zur Ermittlung von diskreten Abtastwerten abgetastet werden.

**5.** Verfahren nach Anspruch 4, **dadurch gekennzeichnet, dass** durch Interpolation der Abtastwerte die Signalverläufe gewonnen werden, aus welchen die Maxima und Minima bestimmt werden.

**6.** Verfahren nach einem der Ansprüche 1 bis 6, **dadurch gekennzeichnet, dass** die Korrekturwerte in einer Korrekturtabelle gespeichert werden.

**7.** Verfahren nach einem der Ansprüche 1 bis 6, **dadurch gekennzeichnet, dass** unter Verwendung der bei dem ersten Kalibrierlauf erhaltenen Korrekturwerte für die Offset- und Amplitudenfehler ein zweiter Kalibrierlauf zur Bestimmung von Korrekturwerten zur Elimination von Phasenfehlern für die einzelnen Perioden der sinusförmigen Spursignale durchgeführt wird.

**8.** Verfahren nach Anspruch 7, **dadurch gekennzeichnet, dass** zur Bestimmung des Phasenfehlers eines bezüglich eines ersten Spursignals phasenverschobenen zweiten Spursignals für jede Periode die Amplitude des ersten Spursignals im Nulldurchgang des zweiten Spursignals gemessen und zur Berechnung eines Korrekturwertes verwendet wird.

**9.** Verfahren nach Anspruch 7, **dadurch gekennzeichnet, dass** zur Bestimmung des Phasenfehlers eines bezüglich eines ersten Spursignals phasenverschobenen zweiten Spursignals die Amplitudenverläufe der beiden sinusförmigen Spursignale gemessen werden und daraus nach der Methode der kleinsten quadratischen Abweichungen eine Ausgleichsfunktion für das phasenverschobene Spursignal zur Bestimmung des Phasenfehlers ermittelt wird.

**10.** Verfahren nach einem der Ansprüche 1 bis 9, **dadurch gekennzeichnet, dass** die Geschwindigkeit des Messgebers während des oder jedes Kalibrierlaufs konstant ist.

**11.** Verfahren nach einem der Ansprüche 1 bis 10, **dadurch gekennzeichnet, dass** die bei dem oder jedem Kalibrierlauf generierten sinusförmigen Spursignale tiefpassgefiltert werden.

**12.** Verfahren nach einem der Ansprüche 1 bis 8, **dadurch gekennzeichnet, dass** mit dem Messgeber (1) wenigstens zwei um einen Phasenwinkel verschobene sinusförmige Spursignale generiert werden, welche jeweils um einen Phasenwinkel von 90° zueinander phasenverschoben sind.

**13.** Verfahren nach einem der Ansprüche 1 bis 12, **dadurch gekennzeichnet, dass** die sinusförmigen Spursignale von einem linearen oder rotativen Messgeber (1) generiert werden.

**14.** Verfahren nach einem der Ansprüche 1 bis 13, **dadurch gekennzeichnet, dass** die Kalibrierung in einer im Messgeber (1) integrierten Rechnereinheit durchgeführt wird.

**15.** Verfahren nach einem der Ansprüche 1 bis 13, **dadurch gekennzeichnet, dass** die Kalibrierung in einer Messgeber-Auswerteeinheit durchgeführt wird.

**16.** Verfahren nach einem der Ansprüche 1 bis 15, **dadurch gekennzeichnet, dass** der Messgeber (1) in einem Antrieb eingesetzt wird.

**17.** Verfahren nach Anspruch 16, **dadurch gekennzeichnet, dass** die Kalibrierung in einem an den Antrieb angeschlossenen Antriebsverstärker durchgeführt wird.

**18.** Verfahren nach Anspruch 17, **dadurch gekennzeichnet, dass** die Kalibrierung in einer Steuerung des Antriebs durchgeführt wird.

Fig. 1

2
5
3
1
6
6b
6d
6a
6c
7
8
4a
4b
4c
4d
9
4e
4

EP 1 674 830 A2

9

# Fig. 2

# Fig. 3

## Fig. 4

Spur B

Spur A

Δφ

II